# EUROPEAN PATENT APPLICATION

(11) **EP 3 647 589 A1**
(43) Date of publication of application: **06.05.2020**
(21) Application number: 18824317.4
(22) Date of filing: 30.01.2018
(51) Int. Cl.: F03G 6/06, F24S 60/30

(54) **IMPROVED BRAYTON PHOTOTHERMAL POWER GENERATION METHOD AND SYSTEM**

(30) Priority: 29.06.2017 CN 201710530395
(71) Applicant: Qinghai Enesoon New Material Technology & Science Co., Ltd, Qinghai Province (CN)
(72) Inventor: ZENG, Zhiyong, Shenzhen Guangdong 518052 (CN); CUI, Xiaomin, Shenzhen Guangdong 518052 (CN); LI, Ke, Shenzhen Guangdong 518052 (CN)
(74) Representative: Schmitt-Nilson Schraud Waibel Wohlfrom Patentanwälte Partnerschaft mbB
(86) International application number: PCT/CN2018/074594
(87) International publication number: WO 2019/000941

(57) **Abstract**

The invention relates to an improved Brayton concentrated solar power generation method, which belongs to the technical field of solar power generation. The method performs the following steps under normal pressure or micro positive pressure: (1) the heat storage medium enters the heat collection device from the low-temperature tank; (2) the sunlight is collected to the heat collection device to transform the heat storage medium into the high-temperature heat storage medium; (3) the high-temperature heat storage medium enters the heat exchanger and exchanges heat with the power working medium; (4) the high-temperature power working medium after heat exchange enters the turbine generator set to provide power generation. Based on the method, the invention also provides a matched power generation system. Adopting the method and device of the invention for power generation has the advantages of low cost, easy construction and maintenance, high efficiency, less restriction, etc., can realize long-term and stable power generation, can be applied to any area, and is conducive to large-scale promotion.

## Description

### Technical field

The invention relates to the technical field of solar power generation, in particular to an improved Brayton concentrated solar power generation method and system.

### Background art

At present, there are many kinds of existing power generation technologies. The traditional thermal power generation is to convert the energy stored in fossil into heat energy and then into electric energy through combustion. In China, thermal power generation accounts for more than 80% of the total power generation in the country. The high energy consumption and high pollution situation of the thermal power industry makes the completion of the task of energy conservation and emission reduction an important breakthrough direction for the thermal power industry.

As an important means to deal with the dual challenges of energy security and climate change, renewable energy, such as solar energy and wind energy, has attracted more and more attention. Countries are vigorously developing new energy based on solar energy and wind energy, wherein, using solar power generation is an important direction of clean new energy development.

Solar power generation is to use the clean energy-the sun as the energy source to complete the supply of electricity. Carbon dioxide and other pollution emissions are greatly reduced, which is relatively clean and friendly to the environment. There are many common ways to use solar energy, including solar photovoltaic power generation, solar power generation, medium and low temperature solar thermal utilization and solar thermal power utilization, etc.

The method of solar photovoltaic power generation is highly reliable, the system installation and maintenance is also convenient, it has many advantages. Among them, the output of photovoltaic power generation is direct current, which is converted into alternating current by inverter and then connected to the Internet. The cost of electricity storage is high, the consistency of batteries is poor, and the form of energy output is single. It is easy to be affected by natural resource conditions, it is volatile, intermittent and random, and its regulation as well as control is difficult. It is more suitable for distributed energy generation supply. Large-scale grid connected operation will have a significant impact on the safe and stable operation of the power grid.

Compared with photovoltaic power generation, concentrated solar power generation uses solar radiation as heat source, and then drives the heat engine cycle system to achieve power generation. Concentrated solar power generation can be equipped with large-scale heat storage system, which overcomes the shortcomings of solar energy with volatility and intermittence. It can store energy, adjust peak and realize continuous power generation. It is more suitable for the construction of large-scale power plant projects, and the cost can be reduced rapidly through scale effect, so it can be used as the replacement of basic power for thermal power. The earliest trough type power station has been in operation for more than 30 years.

According to the different ways of collecting solar energy, solar thermal power generation technology can be divided into four forms: trough type, tower type, dish type and linear Fresnel type. According to the dynamic working medium and the adopted dynamic model, it can be divided into three types: Rankine cycle (steam Rankine cycle power, organic Rankine cycle power), Brayton cycle and Stirling cycle. Among the three kinds of cycles, Stirling cycle heat engine has higher heat energy conversion efficiency, but it is not as mature as Rankine cycle and Brayton cycle in technology, and stirling engine is expensive.

Solar steam Rankine cycle thermal power generation is to focus and collect the direct light of the sun through a large number of reflectors, heat the molten salt or other working medium, convert the solar energy into heat energy, and then use the same process as the traditional thermal cycle, that is, forming high-pressure and high-temperature water vapor to promote the work of the turbine generator set, and finally convert the heat energy into electrical energy.

Because of its large heat capacity, low viscosity, good fluidity, low vapor pressure, wide operating temperature range, liquid molten salt has become a good thermal medium in the application of solar energy. High temperature molten salt energy storage, with its unique performance advantages, has become the first choice of solar steam Rankine cycle thermal power generation energy storage, is the core technology of concentrated solar power generation, and is the fundamental basis for realizing 24-hour continuous power generation.

Compared with coal-fired thermal power generation, except for the difference of heat source acquisition and heat energy storage, the rest are almost the same. Because of this, based on the strong market competitiveness of coal-fired power plants in system design, equipment manufacturing and other aspects, China has laid the foundation for the development of solar thermal power generation. The advantages of solar steam Rankine cycle thermal power generation are mature technology, high operating temperature, high pressure, and high thermal power conversion efficiency. However, due to the use of steam turbine power generation mode, water consumption is large, so there is higher requirements raised on the geographical environment and climate conditions. At present, the innovative technology changes water cooling to air cooling to reduce the consumption of water as much as possible. But the problem is that the self consumption on electricity of the system is increased, and the thermal efficiency is also reduced.

Brayton cycle has a simpler structure than Rankine cycle, which only needs a rotating part (compressor / generator / turbine). The working medium does not change phase in the cycle process, so it has a higher reliability. In places with abundant solar energy, water resources are usually lacking, while in open Brayton cycle, the working medium is air, which does not need water as the circulating working medium, so it has a good application prospect.

Air Brayton tower-type solar power generation technology is a kind of solar power generation technology that can provide efficient and clean electricity. Its working principle is that the solar energy concentrated by the reflector shines on the receiver on the collector, in which is arranged with air compressor and air turbine. The newly entered air is compressed by the air compressor, and then transmitted to the receiver for solar irradiation. After being heated, the temperature of the compressed air rises to about 900°C. The high-temperature hot air expands through the air turbine to work and drives the generator to generate electricity.

In addition to power generation, it can also be used for combined heat and cold power supply, and waste heat can be used to provide hot water, sewage purification, crop drying and refrigeration. It can operate 24 hours a day, can bear the basic load, and is suitable for large-scale grid power supply; it can also be suitable for distributed (such as villages, mines, industrial parks, etc.) small-scale applications.

The system of air Brayton solar power generation technology is simple and has good schedulability, which can meet the basic load or peak load without water / steam, molten salt, heat transfer oil or air. It is especially suitable for the development of solar thermal power generation in areas without water or lacking water.

Brayton cycle tower concentrated solar power generation technology has the advantages of high efficiency, short process, less equipment and less water, which is considered as an important development direction of tower-type thermal power generation technology.

The traditional tower-type Brayton technology uses air or carbon dioxide as working medium. In order to achieve higher system efficiency, it is necessary to heat the air to at least 800°C under a certain pressure, which puts forward high technical requirements for the heat receiver. German space agency DLR and Weitzman Institute of Israel (WIS) adopt quartz glass cover to the cavity receiver developed for this purpose, so that the cavity receiver can maintain good light transmittance and air pressure in the cover.

However, this receiver technology also faces some defects. In order to ensure the reliable sealing between the quartz glass cover and the cavity receiver body at high temperature, the sealing surface needs to be cooled by water. In order to prevent the recrystallization of quartz glass which is easy to occur above 1000°C from becoming opaque, high-purity quartz glass must also be used. Due to the high technical requirements to manufacture the overpressure resistant high-purity quartz glass cover, which is difficult to be large-scale, and the high cost of manufacture, it limits the scale of the receiver, and also limits the scale of a single solar tower type Brayton thermal power plant. The single unit scale of solar tower Brayton thermal power plant developed by Israel AORA company using WIS technology is only 100kW.

In addition, some problems will occurs to this kind of cavity receiver in long-term operation, for example, quartz glass cover or seal may be damaged, and it is difficult to store heat on a large scale. In order to achieve long-term stable power generation, it is necessary to adopt the scheme of hybrid power generation with fossil energy. This has become the bottleneck of the development of tower Brayton technology.

### Summary of the invention

Based on above problems existing in the art, the object of the invention is to provide an improved Brayton concentrated solar power generation method and device which can operate under normal pressure, reduce cost, be easy to store heat and realize long-term stable power generation without large amount of water.

In order to achieve above object, the invention provides the following technical solution:
The invention first discloses an improved Brayton concentrated solar power generation method, characterized in that, the following steps are carried out under normal pressure or micro positive pressure: (1) the heat storage medium enters the heat collection device from the low-temperature tank; (2) the sunlight is gathered into the heat collection device to transform the heat storage medium into the high-temperature heat storage medium; (3) the high-temperature heat storage medium enters the heat exchanger and the power worker Heat and mass transfer; (4) after heat exchange, the high-temperature power working medium enters the turbine generator set to provide power generation. The solar energy is collected by the method provided by the invention for concentrated solar power generation. Compared with the conventional Brayton method, the heat collection and storage links work under non high pressure, so the required equipment does not need special high pressure resistance performance. The energy collection and storage can be conducted under normal pressure or micro positive pressure, which reduces the material requirements for the heat collection and storage devices. Meanwhile, the corresponding design cost, manufacture cost and maintenance operation cost are reduced. At the same time, compared with traditional thermal power generation and steam Rankine thermal cycle, it does not need a large amount of water to generate high temperature and high pressure water steam to generate power for the generator, so the method of the invention can also be popularized in water shortage areas.

The "micro positive pressure" in this disclosure has the conventional technical meaning commonly understood by a person skilled in the art, which is generally expressed as a pressure environment 200-400 PA higher than the atmospheric pressure.

Unless otherwise specified, all terms and special vocabulary recorded in this disclosure, such as "heliostat", "trough heliostat", "linear nefel heliostat", "tower heliostat", "molten salt", "power working medium", "medium", "heat exchanger", "absorption tube", "collector", "reflector", "curved mirror", "condenser", "collector", all of them have technical meanings commonly understood by a person skilled in the art.

In some preferred embodiments, the above steps also include: (5) the high-temperature heat storage medium becomes a low-temperature heat storage medium after heat exchange and re enters the heat collection device. In this step, the cooled heat storage medium returns to the heat collection device, and the hot spot obtained by re gathering sunlight is transformed into high-temperature medium to realize the thermal cycle, so as to provide heat for the next cycle of generation.

In other preferred embodiments, in step (2), the high-temperature heat storage medium is stored in the high-temperature heat pool before entering the heat exchanger, a part of the high-temperature heat storage medium enters the heat exchanger and exchanges heat with the power working medium, and the other part is left in the high-temperature thermal storage cell, which is used to continuously provide heat when the sun is insufficient. The heat cycle and the heat storage step are the guarantee of long-term stable power generation by adopting the method of the invention, and the purpose of heat storage and energy saving is achieved at the same time.

In a further preferred embodiment, the steps (1) to (4) are taken as one round of thermal cycle, and multiple rounds of thermal cycle are carried out to continuously provide power generation for the generator set.

In some specific embodiments, the power working media can be a supercritical gas such as air, helium, nitrogen, carbon dioxide, or an organic working medium such as alkanes. These working media can transfer heat effectively, and they are non-toxic, odorless and harmless.

In some specific embodiments, the way of gathering sunlight in step (1) is tower type concentrating. The thermal power generation system with tower concentrator has obvious scale effect, relatively simple system, short heat transfer path, small heat loss and high temperature.

In particular, the heat storage medium is preferably molten salt. The molten salt includes: solar salt, Hitec salt, low melting point molten salt (composed of potassium nitrate, sodium nitrate, lithium nitrate, calcium nitrate and other components); in addition to the molten salt, other low-cost and easily available heat storage materials can also be used as heat storage medium, such as quartz sand, ceramics, concrete, metal, heat transfer oil, etc.

The invention also claims the use of said Brayton concentrated solar power generation method in power generation and / or heating.

Based on the power generation method provided by the above series of embodiments, the invention also provides an improved Brayton concentrated solar power generation system, which includes a heliostat, a heat collection device, a low-temperature tank, a high-temperature tank, a heat exchanger, and a turbine generator set; the low-temperature tank is used for storing low-temperature heat storage medium; the low-temperature tank is successively located between the heat exchanger and the heat collection device according to the flow direction of the heat storage medium. The solar energy is absorbed by the heat collecting device through the heat medium, and then stored in the high-temperature thermal storage cell; the heliostat is used to collect the solar energy to the heat absorbing medium in the heat collection device; the heat collection device is connected with the high-temperature thermal storage cell through the pipeline, and the high-temperature heat storage medium is used to enter the heat exchanger along the pipeline from the heat collection device; the heat exchanger is used for heat exchange between the high-temperature heat storage medium entering the heat exchanger and the power working medium to obtain the high-temperature power working medium; the heat exchanger is connected with the turbine generator set to make the high-temperature power working medium enter the generator set to provide power generation. The low-temperature heat storage medium after heat exchange is stored in the low-temperature tank, and enters the heat collection device again from the low-temperature tank. In this step, the cooled heat storage medium re enters the heat collection device, and re gathers the sun light to obtain the hot spot, and transforms into the high-temperature medium, so as to realize the heat cycle and provide heat for the next cycle of generation.

The heat exchanger can be a three-stage heat exchanger; the three-stage heat exchanger includes an superheated steam exchanger, a saturated steam exchanger and a preheated steam exchanger, which are connected in series; the working medium output end of the superheated steam exchanger is connected with the turbine generator set, and the medium output end is connected with the saturated steam exchanger; the medium output end of the preheated steam exchanger is connected with the low temperature tank, to make the low-temperature medium after heat exchange return to the low-temperature tank.

In addition to the three-stage heat exchanger, steam heat exchanger, the heat exchanger can also be other types of heat exchanger commonly used in the art, such as floating head heat exchanger, fixed tube sheet heat exchanger, U-tube sheet heat exchanger, plate heat exchanger, etc. Those skilled in the art can make conventional selection and reasonable adjustment on various heat exchangers according to the specific needs in practical work.

The power generation principle of the system of this invention is as follows: the sun light is reflected and focused into the heat collection device on the tower top through the heliostat, the medium in the heat collection device absorbs the heat energy and transforms into the high-temperature medium, enters the high-temperature thermal storage cell through the pipeline, a part of the high-temperature medium is stored in the tank body, for providing the energy when the solar energy is insufficient, and a part of the high-temperature medium enters the heat exchanger to exchange heat with supercritical stated air, helium, nitrogen, carbon dioxide and other gases or alkanes organic working medium. The high temperature gas after heat exchange enters the turbine generator set to provide power generation. After heat exchange, the low-temperature medium enters the low-temperature tank, and then enters the heat collection device by recycling to enter the next heat cycle.

Compared with thermal power generation and steam Rankine thermal cycle, the above device of the invention does not need a large amount of water to generate high temperature and high pressure water vapor to push the steam turbine to generate electricity, so as to solve the construction and operation of solar concentrated solar power generation in water deficient or anhydrous areas such as Northwest China; compared with tower-type Brayton technology using air or carbon dioxide as heat collection and transfer medium, heat collection and transfer of molten salt are performed under normal pressure or micro positive pressure, it does not need special design of high-pressure resistant equipment, so as to reduce the design and construction cost of the collector pipeline.

In the preferred embodiment of the invention, the Brayton concentrated solar power generation system also comprises a high-temperature thermal storage cell for storing a high-temperature heat storage medium, which is successively located between the heat collection device and the heat exchanger according to the flow direction of the heat storage medium. The high-temperature heat storage medium is stored in the high-temperature thermal storage cell before entering the heat exchanger, one part of the high-temperature heat storage medium enters the heat exchanger to exchange heat with the power working medium, and the other part is left in the high-temperature thermal storage cell to continuously provide heat when the sunlight is insufficient. The heat cycle and the heat storage step are the guarantee for realizing the long-term stable power generation by adopting the method of the invention, at the same time, increasing the molten salt energy storage, solving the temperature that the solar energy can not stably supply energy, and achieving the purpose of heat storage, energy saving and long-term stable power generation.

In some preferred embodiments of the invention for heat supply, the Brayton concentrated solar power generation system also includes connecting a heat exchanger at the back of the generator set for heat exchange of gas from the generator set for residual heat utilization, providing hot water or other heat utilization.

In the specific embodiment of the invention, the heat storage medium preferably adopts molten salt; in addition to the molten salt, other low-cost and easily available heat storage materials can also be used as the heat storage medium, such as quartz sand, ceramics, metals, heat transfer oil, concrete, etc.

In other embodiments, the heliostat is selected from one or more of the following: slot heliostat, tower heliostat, and linear Fresnel heliostat. These kinds of heliostats have different characteristics in condensation, for example, the heat collection efficiency of the trough vacuum tube is high, the heat loss is small, and the working life is long; a large number of foreign solar thermal power stations adopt the trough system, which is related to the maturity of the vacuum collector tube products. The linear Fresnel thermal power generation system is simple, and the reflector can be a flat mirror, which has low cost and low efficiency. Tower type thermal power generation system is characterized by large scale, small heat consumption and high temperature.

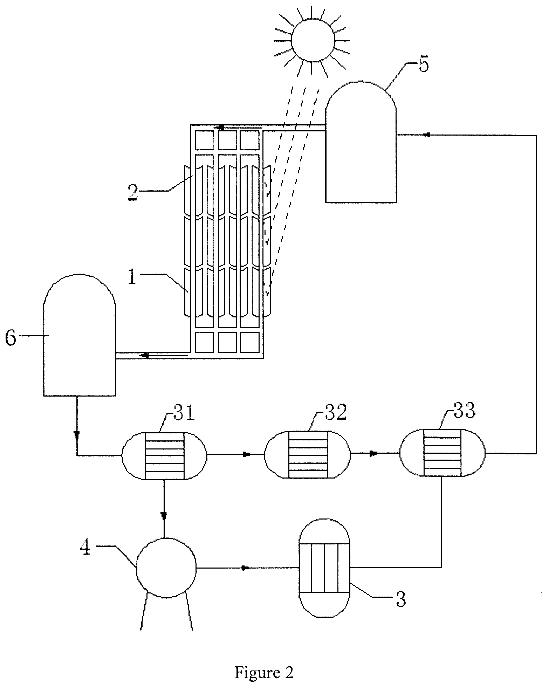

In a specific embodiment, the heliostat is a "trough heliostat"; the trough heliostat is also called a "trough collector", which has the technical meaning commonly understood by those skilled in the art. Its external structure is shown in component 1 in Figure 2. It is a way of light heat conversion, which realizes the conversion of light energy to heat energy through focusing, reflection and absorption, so as to make heat exchange reach a certain temperature to meet different heat collection devices with different load needs. Trough type collector belongs to the category of medium and high temperature collector, which can make the heat exchange working medium get higher temperature, and can be used in life and production fields such as thermal power generation, desalination treatment, heating engineering, absorption refrigeration, etc. Because of the wide application prospect of solar energy, solar energy is the main energy source of trough collector. Solar trough collector plays a leading role in the solar energy utilization system. It provides heat source for the system. Its efficiency and investment cost will affect the efficiency and economy of the whole system. The trough type solar energy collector adopts the vacuum glass tube structure, that is, the inner tube adopts the metal tube coated with high absorption rate selective absorption layer, the heating medium is in the tube, and the outer tube is glass tube, and the vacuum between the glass tube and the metal tube is created to restrain the convection and heat conduction loss. As shown in Fig. 2, the trough heliostat 1 of the invention can focus the sunlight directly on the collector 2; in the specific embodiment of the trough heliostat, the collector 2 specifically refers to the collector tube.

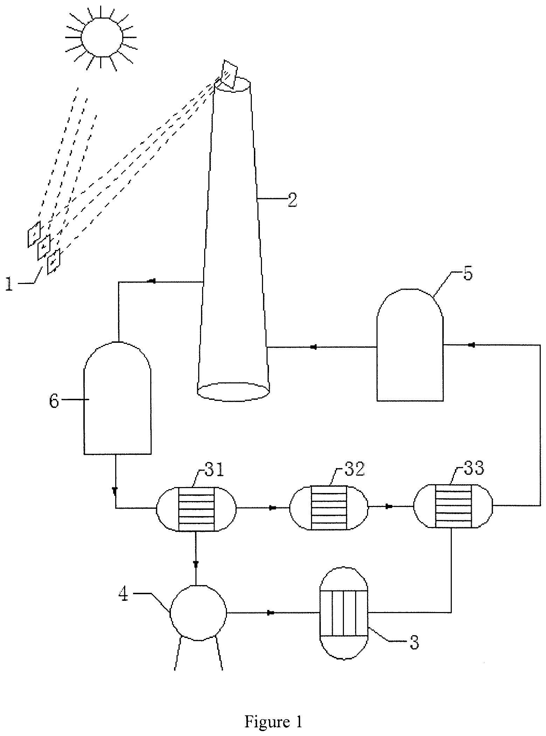

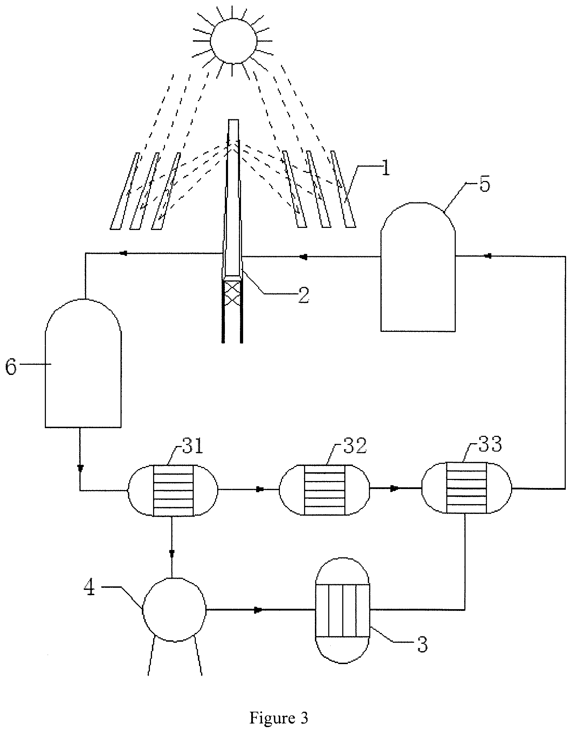

In other embodiments, the heliostat is a "tower type heliostat"; the tower type heliostat has a technical meaning commonly understood by those skilled in the art and is generally applied to a solar tower power generation system. Tower power generation system, also known as the centralized system, is equipped with many large-scale solar reflectors (i.e. "tower heliostat") on a large area of the site, each of which is equipped with a tracking unit to accurately focus and reflect the sunlight on the receiver at the top of a high tower. The condenser magnification on the receiver can be more than 1000 times. Here, the absorbed solar energy is converted into heat energy, and then the heat energy is transferred to the working medium. After the heat storage link, it is input into the thermal power machine, expanded to work, to drive the generator, and finally output in the form of electric energy. It is mainly composed of condensation subsystem, heat collection subsystem, heat storage subsystem, electricity generation subsystem, etc. The schematic structure of the tower heliostat in this disclosure is shown as component 1 in Figure 1, and as shown in Figure 1, the tower heliostat 1 in the invention can directly focus the solar energy on the collector 2; in the specific embodiment of the tower heliostat, the heat collection device 2 refers to the collector. In other embodiments, the heliostat is a "linear Fresnel type heliostat"; the linear Fresnel type heliostat has the technical meaning commonly understood by those skilled in the art. The linear Fresnel type heliostat is also called as a linear Fresnel type system, which is composed of a reflector, a condenser and a tracking unit. The flat or slightly curved reflector is installed on the tracker, the heat absorbing pipe is installed in the space above the reflector, and the reflector reflects the sunlight to the heat pipe. Sometimes a small parabolic reflector is added on the top of the condenser to enhance the focus of the sunlight. As shown in Figure 3, the curved mirror of the "linear Fresnel heliostat" 1 in the invention absorbs the solar energy and reflects the same to the collector 2. In the specific embodiment of the "linear Fresnel", the heat collection device 2 is an absorption tube and a collector.

In the preferred embodiment, the power working medium refers to supercritical fluid; the supercritical fluid is specifically selected from air, helium, nitrogen, carbon dioxide in supercritical state; or, the power working medium can also be alkane hydrocarbon organic working medium; the above can carry out heat transfer, belonging to the power working medium commonly used in the field, odorless and harmless.

Other embodiments of the invention also provide use of the Brayton concentrated solar power generation system in power generation and / or heating.

It's known through practice comparison that, compared with the traditional Brayton concentrated solar power generation, under the same equivalent condition, the method and device of the invention are used for power generation, while the installed capacity of the traditional Brayton power generation method is only kilowatt level, and most of them are modular units. However, the method of the invention is used for power generation, and the installed capacity can reach above gigawatt level, and the scale effect of cost reduction is obvious. It can be seen that, the improved Brayton concentrated solar power generation method and device provided by the invention not only reduce the cost of design, construction, operation and maintenance, realize long-term stable and continuous power generation, but also significantly superior to the traditional power generation method in terms of power generation efficiency and scale, and is conducive to promotion in various regions (including drought and lack of regions), so as to realize low-cost and high efficiency Large scale solar power generation.

### Description of drawings

Figure 1 is a schematic diagram of the equipment structure used in the power generation method provided by one embodiment of the invention; the labels in the diagram respectively represent: 1-heliostat; 2-heat collection device; 3-heat exchanger; 31-superheated steam exchanger; 32-saturated steam exchanger; 33-preheating steam exchanger; 4-generator set; 5-low temperature tank; 6-high temperature thermal storage cell.

### Embodiments

The invention will be further described in detail in combination with the drawings and the specific embodiments, but the scope of the invention will not be limited. Unless otherwise specified, the operations used in the following embodiments are all conventional methods, and the materials used can be commercially available.

### Example Group 1, the improved Brayton concentrated solar power generation method of the invention

This group of examples provides an improved Brayton concentrated solar power generation method. All examples of this group have the following common features: the Brayton concentrated solar power generation method comprises the following steps under normal pressure or micro positive pressure: (1) the heat storage medium enters the heat collection device from the low-temperature tank; (2) the sun light is gathered into the heat collection device to transform the heat storage medium into the high-temperature heat storage medium; (3) the high-temperature heat storage medium enters the heat exchanger and exchanges heat with power working medium; (4) the high-temperature power working medium after heat exchange enters the turbine generator set to provide power generation. Compared with the conventional Brayton method, the method of this invention to collect solar energy for concentrated solar power generation does not need to apply high pressure to the power working medium, so the required equipment does not need special high pressure resistance performance. Generating power under normal pressure or micro positive pressure can reduce the design as well as construction cost and maintenance as well as operation cost of the power generation system; meanwhile, the power working medium used in the method of this invention is gas working medium, so the generator set used is turbine; compared with traditional thermal power generation and steam Rankine thermal cycle, it does not need a large amount of water to generate high temperature and high pressure water steam to generate power for the generator, so the method of the invention can also be popularized in water shortage areas; at the same time, the turbine is used to generate power so that the overall efficiency of the whole generation system has increased to 90% from about 20% of the existing traditional concentrated solar power generation and about 40% of the traditional Brayton power generation. Moreover, the installed capacity can reach above gigawatt level, which is more than 10-100 times of the traditional concentrated solar power generation method and Brayton method.

In a further example, preferably, the above steps also include: (5) the high-temperature heat storage medium becomes a low-temperature heat storage medium after heat exchange and then re enters the heat collection device. In this step, the cooled heat storage medium is re entered into the heat collection device, and the hot spot obtained by re gathering sunlight is transformed into high-temperature medium to realize the thermal cycle, so as to provide heat for the next cycle of generation.

In the specific example, in the step (3), the high-temperature heat storage medium is preferably stored in the high-temperature heat pool before entering the heat exchanger, one part of the high-temperature heat storage medium enters the heat exchanger to exchange heat with the power working medium, and the other part is left in the high-temperature thermal storage cell for continuous heat supply when the sunlight is insufficient. The heat cycle and the heat storage step are the guarantee of long-term stable power generation by adopting the method of the invention, and the purpose of heat storage and energy saving is achieved at the same time.

In a further example, the steps (1) to (5) above are taken as one round of thermal cycle, and multiple rounds of thermal cycle are carried out to continuously provide power generation for the generator set.

In this group of examples, the power working medium refers to supercritical fluid; the supercritical fluid is specifically selected from supercritical air, helium, nitrogen, carbon dioxide; or, the power working medium can also be alkane hydrocarbon organic working medium; all above are odorless and harmless. The power working medium commonly used in the field can be used for heat transfer.

In specific examples, the heat storage medium preferably adopts molten salt, which includes: solar salt, Hitec salt, low melting point molten salt (composed of potassium nitrate, sodium nitrate, lithium nitrate, calcium nitrate, additives and other components); in addition to the molten salt, other low-cost and easily available heat storage materials can also be used as heat storage working medium, such as quartz sand, ceramics, concrete, metal, heat transfer oil, etc.

### Example group 2. the improved Brayton concentrated solar power generation system

This group of examples provides an improved Brayton concentrated solar power generation system. In all examples of this group, the Brayton concentrated solar power generation system has the following common features: as shown in figure 1-figure 3, the Brayton concentrated solar power generation system includes a low-temperature tank 5, a heliostat 1, a heat collection device 2, a heat exchanger 3, and a generator set 4; a low-temperature tank 5 and a high-temperature thermal storage cell 6 are used to store the low-temperature heat storage medium after heat exchange; the low-temperature tank 5 is between the heat exchanger 3 and the heat collection device 2 in accordance with the flow direction of the heat storage medium. The low-temperature heat storage medium after heat exchange is stored in the low-temperature tank 5, and enters the heat collection device 2 again from the low-temperature tank 5. In this step, the cooled heat storage medium re enters the heat collection device 2, and re gathers the sun light to obtain the hot spot and transforms it into the high-temperature medium to realize the heat cycle, so as to provide heat for the next cycle of generation. The heat collection device 2 is used for storing the heat storage medium; the heliostat 1 is connected with the heat collection device 2 to gather the sunlight into the heat collection device 2 to transform the heat storage medium in the heat collection device 2 into the high-temperature heat storage medium; the heat collection device 2 is connected with the through a pipe to let the high-temperature heat storage medium enter the heat exchanger 3 from the heat collection device 2 along the pipe. The heat exchanger 3 is used for exchanging heat between the high temperature heat storage medium and the power working medium entering the heat exchanger 3 to obtain the high temperature power working medium; the heat exchanger 3 is connected with the generator set 4 to make the high temperature power working medium enter the generator set 4 for providing power generation.

In a preferred example of this group, the Brayton concentrated solar power generation system also includes a high-temperature heat pool 6 for storing high-temperature heat storage medium; the high-temperature heat pool 6 is successively located between the heat collection device 2 and the heat exchanger 3 according to the flow direction of the heat storage medium. The high-temperature heat storage medium is stored in the high-temperature heat pool before entering the heat exchanger 3, one part of the high-temperature heat storage medium enters the heat exchanger 3 to exchange heat with the power working medium, and the other part is left in the high-temperature thermal storage cell 6 to provide heat continuously when the sun light is insufficient. The heat cycle and the heat storage step are the guarantee for realizing the long-term stable power generation by adopting the method of the invention, at the same time, it increases the molten salt energy storage, solves the temperature that the solar energy can not stably supply energy, and achieves the purpose of heat storage, energy saving and long-term stable power generation.

In a specific example, the heliostat is a "trough heliostat"; the trough heliostat is also called a "trough collector", which has the technical meaning commonly understood by those skilled in the art. Its external structure is shown as component 1 in Figure 2. It is a way of light heat conversion, which realizes the conversion of light energy to heat energy through focusing, reflection and absorption, so as to make the heat exchange medium reach a certain temperature to meet different load need of different heat collection device. Trough type collector belongs to the category of medium and high temperature collector, which can make the heat exchange quality get higher temperature, and can be used in life and production fields such as thermal power generation, desalination treatment, heating engineering, absorption refrigeration, etc. Because of the wide application prospect of solar energy, solar energy is the main energy source of trough collector. Solar trough collector plays a leading role in the solar energy utilization system. It provides heat source for the system. Its efficiency and investment cost will affect the efficiency and economy of the whole system. The trough type solar energy collector adopts the vacuum glass tube structure, that is, the inner tube adopts the metal tube coated with high absorption rate selective absorption layer, the heating medium is in the tube, and the outer tube is glass tube, and the vacuum between the glass tube and the metal tube is created to restrain the convection and heat conduction loss. As shown in Fig. 2, the trough heliostat 1 of the invention can focus the sunlight directly on the collector 2; in the specific example of the trough heliostat, the collector 2 specifically refers to the collector tube.

In other examples, the heliostat is a "tower type heliostat"; the tower type heliostat has a technical meaning commonly understood by those skilled in the art and is generally applied to a solar tower power generation system. Tower power generation system, also known as the centralized system, is equipped with many large-scale solar reflectors (i.e. "tower heliostat") on a large area of the site, each of which is equipped with a tracking unit to accurately focus the sunlight reflection on the receiver at the top of a high tower. The condenser magnification on the receiver can be more than 1000 times. Here, the absorbed solar energy is converted into heat energy, and then the heat energy is transferred to the working medium. After the heat storage link, it is input into the thermal power machine, expanded to work, to drive the generator, and finally output in the form of electric energy. It is mainly composed of condensation subsystem, collecting subsystem, heat storage subsystem, electricity generation system, etc. The schematic structure of the tower heliostat in this disclosure is shown as component 1 of Figure 1, and as shown in Figure 1, the tower heliostat 1 in the invention can directly focus the solar energy on the heat collection device 2; in the specific example of the tower heliostat, the heat collection device 2 refers to the collector.

In other examples, the heliostat is a "linear Fresnel type heliostat"; the linear Fresnel type heliostat has the technical meaning commonly understood by those skilled in the art. The linear Fresnel type heliostat is also called a linear Fresnel type system, which is composed of a reflector, a concentrator and a tracking unit. The flat or slightly curved reflector is installed on the tracker, the heat pipe is installed in the space above the reflector, and the reflector will reflect the sunlight to the heat pipe. Sometimes a small parabolic reflector is added on the top of the condenser to enhance the focus of the sun. As shown in Figure 3, the curved mirror of the "linear Fresnel heliostat" 1 in the invention absorbs the solar energy and reflects the same to the collector 2. In the specific example of the "linear Fresnel", the heat collection device 2 is an absorption tube and a collector.

The power generation principle of the above devices in this group is as follows: the sunlight is reflected and focused into the heat collection device 2 through the heliostat 1, the heat storage medium in the heat collection device 2 absorbs the heat energy and then transforms into the high-temperature molten salt, which enters the high-temperature thermal storage cell 6 through the pipeline, part of the high-temperature molten salt is stored in the tank body, which is used to provide the energy when the solar energy is insufficient, part of the high-temperature molten salt enters the heat exchanger 3 and exchange heat with the supercritical fluids, such as air, nitrogen, helium, carbon dioxide, or alkanes power working medium. The high temperature gas after heat exchange enters turbine generator set 4 to provide power generation. After heat exchange, the low-temperature molten salt enters the low-temperature tank 5, and enters the heat collection device 2 by recycling to enter the next heat cycle. Compared with thermal power generation and steam Rankine thermal cycle, the above device of the invention does not need a large amount of water to generate high temperature and high pressure water vapor to push the steam turbine to generate electricity, so as to solve the construction and operation of solar concentrated solar power generation in water deficient or anhydrous areas such as Northwest China; compared with tower Brayton technology using air or carbon dioxide as heat collection and transfer medium, heat collection and transfer by molten salt are performed under normal pressure or micro positive pressure, it does not need special design of high-pressure resistant equipment, so as to reduce the design and construction cost of the collector pipeline.

In some preferred examples of the group for heat supply, the Brayton concentrated solar power generation system also includes a additional heat exchanger 3 is connected at the back of the generator set 4 for heat exchange of the gas from the generator set 4 for residual heat utilization, for providing hot water or other heat utilization.

In the specific examples of this group, the heat storage medium is preferably molten salt. The molten salt includes: solar salt, Hitec salt, low melting point molten salt (composed of potassium nitrate, sodium nitrate, lithium nitrate, calcium nitrate and other components); in addition to the above molten salt, other low-cost and easily available heat storage materials can also be used as heat storage medium, such as quartz sand, ceramics, concrete, metal, heat transfer oil, etc.

In a preferred example, in this example, the power working medium refers to supercritical fluid; the supercritical fluid is specifically selected from the supercritical stated air, helium, nitrogen, carbon dioxide; or, the power working medium can also be alkane hydrocarbon organic working medium; all of these are odorless and harmless, and the power working medium commonly used in the field can be used for heat transfer.

### Example group 3: An improved Brayton solar thermal power generation system based on trough heliostat

This group of examples provides an improved Brayton concentrated solar power generation system based on a trough heliostat. The embodiments of this group have the following common features: as shown in Figure 2, the improved Brayton solar thermal power generation system includes a trough type heliostat 1 that can gather solar energy to the heat collection device, a heat collection device 2 that can convert the heat storage medium to a high-temperature heat storage medium, a low-temperature tank 5 that can store low-temperature heat storage medium, a high-temperature thermal storage cell 6 that can store high-temperature heat storage medium, and a heat exchanger 3 which exchange heat between the high-temperature heat storage medium and power working medium, and turbine generator set 4; the heat collection device 2, high temperature heat pool 6, heat exchanger 3 and low temperature tank 5 are connected in series through pipes to form a circulation circuit for medium flow, so that the high temperature heat storage medium in the heat collection device 2 enters the high temperature heat pool 6 through the pipes; the medium in the high temperature heat pool 6 enters the heat exchanger 3 again to realize energy exchange between high temperature medium and working medium. The heat exchanger 3 is connected with the turbine generator set 4, so that the high temperature power working medium enters the turbine generator set 4 to provide power generation.

In a further example, the heat exchanger 3 is a three-stage heat exchanger; the three-stage heat exchanger includes an superheated steam exchanger 31, a saturated steam exchanger 32 and a preheated steam exchanger 33, which are successively connected in series; the working medium output end of the superheated steam exchanger is connected with a turbo generator set, and the medium output end is connected with a saturated steam exchanger; and the medium output end of the preheated steam exchanger is connected with the low-temperature tank to make the low-temperature medium after heat exchange return to the low-temperature tank; or, the heat exchanger can also adopt other types of heat exchanger other than the steam heat exchanger.

In specific examples, the heat storage medium is selected from molten salt, quartz sand, ceramics, concrete, metal, or heat transfer oil.

In other examples, the molten salt refers to solar salt, Hitec salt, or low melting point molten salt.

In some examples, the power working medium is selected from air, helium, nitrogen, carbon dioxide, or alkane organic working medium.

In a more specific example, the trough type heliostat includes a reflector and a condenser; the condenser is arranged on the heat collection device; the reflector has a long groove structure with a paraboloid.

In a preferred embodiment, the parabolic side of the reflector is set toward the direction of sunlight.

In a further example, the trough heliostat also includes a tracker that can track the sun's illumination angle; the reflector is installed on the tracker to maintain the best angle of receiving and reflecting solar energy at all times.

In a specific example, the heat collection device is a heat collecting pipe.

### Examples group 4: An improved Brayton solar thermal power generation system based on tower heliostat

This group of examples provides an improved Brayton concentrated solar power generation system based on a tower heliostat. In all examples of this group, the improved Brayton concentrated solar power generation system has the following common features: as shown in Figure 1, the improved Brayton concentrated solar power generation system includes a tower type heliostat 1 that can gather solar energy to the heat collection device, a heat collection device 2 that can convert the heat storage medium to a high-temperature heat storage medium, a low-temperature tank 5 that can store low-temperature heat storage medium, and a high-temperature thermal storage cell 6 that can store high-temperature heat storage medium, the heat exchanger 3 which can exchange heat between the high-temperature heat storage medium and the power working medium to obtain the high-temperature power working medium, and the turbine generator set 4; the heat collection device 2, the high-temperature heat pool 6, the heat exchanger 3 and the low-temperature tank 5 are successively connected in series through the pipes to form a circulating circuit for medium flow, so that the high-temperature heat storage medium in the heat collection device 2 enters the high-temperature heat pool 6 through the pipes. The medium in the high-temperature heat pool 6 re-enters the heat exchanger 3 to realize the energy conversion between the high-temperature medium and the working medium; the heat exchanger 3 is connected with the turbine generator set 4, so that the high-temperature power working medium enters the turbine generator set 4 to provide power generation.

In the specific examples of this group, the heat exchanger is a three-stage heat exchanger; the three-stage heat exchanger includes an superheated steam exchanger 31, a saturated steam exchanger 32 and a preheated steam exchanger 33, which are connected in series; the working medium output end of the superheated steam exchanger is connected with a turbo generator set, and the medium output end is connected with the saturated steam exchanger; the medium output end of the preheated steam exchanger is connected with the low-temperature tank to make the low-temperature medium after heat exchange return to the low-temperature tank; or, the heat exchanger can also use other types of heat exchanger other than the steam heat exchanger.

In specific examples, the heat storage medium is selected from molten salt, quartz sand, ceramics, concrete, metal, or heat transfer oil.

In some examples, the molten salt refers to solar salt, Hitec salt, or low melting point molten salt.

In other examples, the power working medium is selected from air, helium, nitrogen, carbon dioxide, or alkane organic working medium.

In a specific example, the tower heliostat includes a reflector that can reflect sunlight and a receiver that can receive sunlight from the reflector; the receiver is arranged on the heat collection device.

In a preferred example, the receiver is a condenser, which is arranged on the top of the collector.

In a further example, the tower heliostat also includes a tracker that can track the sun's illumination angle; the reflector is installed on the tracker to maintain the best angle of receiving and reflecting solar energy at all times.

In a specific example, the heat collection device is a collector.

### Examples group 5: improved Brayton concentrated solar power generation system based on linear Fresnel heliostat

This group of examples provides an improved Brayton concentrated solar power generation system based on a linear Fresnel heliostat. All embodiments of this group have the following common features: as shown in Figure 3, the improved Brayton concentrated solar power generation system based on the linear Fresnel heliostat includes: a linear Fresnel heliostat 1 that can gather solar energy to the heat collection device, a heat collection device 2 that can convert the heat storage medium into the high-temperature heat storage medium, a low-temperature tank 5 that can store the low-temperature heat storage medium, and a high-temperature thermal storage cell 6 that can store the high-temperature storage medium, a heat exchanger 3 which can exchange heat between the high-temperature heat storage medium and the power working medium to obtain the high-temperature power working medium, and a turbine generator set 4;

The heat collection device 2, the high-temperature thermal storage cell 6, the heat exchanger 3 and the low-temperature tank 5 are connected in series through pipes to form a circulation circuit for medium flow, so that the high-temperature heat storage medium in the heat collection device 2 enters the high-temperature heat pool 6 through the pipes; the medium in the high-temperature heat pool 6 enters the heat exchanger 3 again to realize the energy conversion between the high-temperature medium and the working medium; the heat exchanger 3 is connected with the turbine generator set 4 to make the high-temperature power working medium enter the turbine generator set 4 to provide power generation.

In a specific example of this group, the heat exchanger is a three-stage heat exchanger; the three-stage heat exchanger includes an superheated steam exchanger, a saturated steam exchanger and a preheated steam exchanger, which are successively connected in series; the working medium output end of the superheated steam exchanger is connected with the turbine generator group, and the medium output end is connected with the saturated steam exchanger; and the medium output end of the preheated steam exchanger is connected with the low-temperature tank to make the low-temperature medium after heat exchange return to the low-temperature tank; or, the heat exchanger can also adopt other types of heat exchanger other than the steam heat exchanger.

In other examples, the heat storage medium is selected from molten salt, quartz sand, ceramics, concrete, metal, or heat transfer oil.

In some examples, the molten salt refers to solar salt, Hitec salt, or low melting point molten salt.

In specific examples, the power working medium is selected from air, helium, nitrogen, carbon dioxide, or alkane organic working medium.

In a preferred example, the linear Fresnel heliostat includes a curved mirror that can gather sunlight reflection onto a collector.

In a further example, the linear Fresnel type heliostat also includes a tracker that can track the sun's irradiation angle; the curved mirror is installed on the tracker to maintain the best angle of receiving and reflecting solar energy at all times.

In other examples, the heat collection device is an absorption tube and a collector.

In all examples of the invention including "molten salt", the molten salt is selected from monomer molten salt, binary composite molten salt, ternary composite molten salt, or multiple composite molten salt.

In some preferred examples, the silica is selected from nano silica, and / or hydrated silica.

In more specific examples, the monomer molten salt includes monomer nitrate, monomer carbonate, monomer sulfate, monomer silicate, or monomer chloride; or their respective aqueous crystalline salts;
The monomer nitrate includes: potassium nitrate, sodium nitrate, sodium nitrite, lithium nitrate, or calcium nitrate, etc.; or their respective aqueous crystal salts; for example, the aqueous crystal salt of the calcium nitrate may be calcium nitrate tetrahydrate (melting point 40 °C), etc;
The monomer carbonate includes: potassium carbonate, sodium carbonate, or lithium carbonate, etc.; or their respective aqueous crystal salts; for example, the aqueous crystal salt of sodium carbonate may be sodium carbonate monohydrate, sodium carbonate heptahydrate, or sodium carbonate decahydrate;
The monomer sulfate includes: magnesium sulfate, sodium sulfate, etc.; or their respective aqueous crystal salts; for example, the aqueous crystal salt of magnesium sulfate can be magnesium sulfate heptahydrate; the sodium sulfate can be sodium sulfate decahydrate;
The monomer silicate includes: sodium silicate, lithium silicate, sodium metasilicate or sodium disiloquinate, etc.; or their respective aqueous crystal salts; for example, the aqueous crystal salt of the sodium metasilicate may be sodium metasilicate pentahydrate or sodium metasilicate pentahydrate;
The monomer chloride salt includes: calcium chloride, sodium chloride, magnesium chloride, etc. Or their respective aqueous crystal salts; for example, the aqueous crystal salt of magnesium chloride may be magnesium chloride hexahydrate;
The binary composite molten salt includes: KNO₃-NaNO₃ system, K₂CO₃-Na₂CO₃ system, KNO₃-NaNO₂ system;
The ternary composite molten salt includes: KNO₃-NaNO₃-NaNO₂ system, NaNO₃-KNO₃-LiNO₃ system, KNO₃-NaNO₃-Ca(NO₃)₂ system;
The multi-component composite molten salt comprises: KNO₃-NaNO₃-NaNO₂-CsNO₃ system, KNO₃-NaNO₃-NaNO₂-Ca(NO₃)₂ system , KNO₃-NaNO₃-NaNO₂-LiNO₃ system , KNO₃-NaNO₃-CsNO₃-Ca(NO₃)₂ system , KNO₃-NaNO₃-LiNO₃-CsNO₃ system , Ca(NO₃)₂4H₂O -KNO₃-NaNO₃-LiNO₃ system , KNO₃-NaNO₃-LiNO₃-Ca(NO₃)₂ system, KNO₃-NaNO₃-NaNO₂-CsNO₃-Ca(NO₃)₂ system, KNO₃-NaNO₃-KNO₂-CsNO₃ system, K₂CO₃-Na₂CO₃-NaCl-Li₂CO₃ system, K₂CO₃-Na₂CO₃-Li₂CO₃-NaCl-MgO-CaO system;
The melting point of the above-mentioned molten salts, especially binary, ternary and multi-component composite molten salts, varies with the change of monomer components in their respective systems, but the melting point range of all kinds of molten salts is in the range of 40-1500 °C.

In the above examples, the specific system formula of the binary composite molten salt is recorded in Chinese patent zl201310731924, zl201310732781, zl201310733403, zl201310733405 and Chinese patent application cn201310732738; The specific system formula of the ternary composite molten salt is recorded in Chinese patent zl201310029569, zl201310732785 and Chinese patent application cn201310040070;

The specific system formula of the multi-component composite molten salt is recorded in Chinese patent zl201310053597, zl201310731924, zl201310732816, zl201310731910 and Chinese patent application cn201310040909.

### Experimental example. use of the method and device of this invention in power generation

The method described in any of the 1^{st} group of examples and / or the device described in any of the 2^{nd}, 3^{rd}, 4^{th} and 5^{th} groups of examples are used for photo thermal power generation, and compared with the traditional Brayton power generation method under the same conditions (the same environment, basic equipment, equipment and working medium used in the same link), as shown in Table 1 below:

**Table 1**

| Method and / device | Installed capacity (unit: MW) | Working pressure of system (unit: PA) | System generation efficiency (%) |
|---|---|---|---|
| The invention | Above 10³ | Atmospheric pressure / micro positive pressure | 90 |
| Traditional concentrated solar power generation | 50-100 | About 5-10M | 16-25 |
| Traditional Brayton | 10 | 20-30 | 40-45 |

It can be seen from the above table that the method of the invention has the following remarkable advantages compared with the traditional Brayton method and the traditional thermal power generation method:
1. The method and / or device of the invention are used for power generation, and the installed capacity can reach gigawatt level; while the installed capacity of the traditional Brayton method is only 10 megawatt, and the traditional concentrated solar power generation method is 50-100 megawatt, by comparison, the installed capacity of the improved method of the invention, is increased by more than 10-100 times, which makes the large-scaled Brayton concentrated solar power generation possible, and the cost is reduced by 20-30%;
2. When electric power generation is conducted by the traditional Brayton method, system pressure is usually 30MPa due to the need to heat the gas working medium to a very high temperature; however, the method of the invention only involves high pressure in the heat exchange link, and the system is under normal pressure or micro positive pressure in the heat collection and storage system; the direct benefits brought by this difference are: (1) due to the greatly reduced pressure, the equipment loss caused by the original ultra-high pressure no longer exists, the cost of equipment maintenance is greatly reduced; (2) because there is no need to pressurize, the operation difficulty and technical requirements are greatly reduced, and the operation cost of the whole process is also relatively greatly reduced. Cost reduction is a very important advantage and benefit in the field of solar power generation, especially for large-scale power generation.
3. In the traditional solar thermal power generation method, the power generation efficiency of the whole power generation system is about 16-25%; while the overall power generation efficiency of the method of the invention can reach 90%, with significant advantages.
4. The heat storage medium and gas working medium are used for heat exchange, and the superheated gas working medium is used to provide energy for the generator for power generation, so as to avoid the disadvantage that the traditional heat power generation needs a large amount of water, so that the power generation method and device of the invention can be popularized in the areas of water shortage and drought, and realize large-scale power generation.
5. The power generation efficiency of the system of the invention is slightly different due to different types of heliostat, but all of them can be stably maintained at more than 90%, and the power generation efficiency of tower heliostat is the highest, up to 95%.

## Claims

1. An improved Brayton concentrated solar power generation method, **characterized in that**, the following steps are carried out under normal pressure or micro positive pressure environment:
(1) the heat storage medium enters the heat collection device from the low temperature tank;
(2) collecting sunlight into the heat collection device to transform the heat storage medium into a high-temperature heat storage medium, which is stored in a high-temperature thermal storage cell;
(3) the high-temperature heat storage medium enters the heat exchanger from the high-temperature thermal storage cell and exchanges heat with the power working medium;
(4) after heat exchange, the high-temperature power working medium enters the turbine generator set to provide power generation.

2. The Brayton concentrated solar power generation method according to claim 1, **characterized in that**, the steps further comprise:,
(5) the high-temperature heat storage medium becomes a low-temperature heat storage medium after heat exchange and then returns to the low-temperature tank.

3. The Brayton concentrated solar power generation method according to claim 1, **characterized in that**, in the step (3), before the high-temperature heat storage medium enters the heat exchanger, one part of the high-temperature heat storage medium enters the heat exchanger to exchange heat with the power working medium, and the other part is left in the high-temperature thermal storage cell to continuously provide heat when the sunlight is insufficient.

4. The Brayton concentrated solar power generation method according to claim 1 or 2, **characterized in that**, the steps (1) to (5) are taken as one round of thermal cycle, and multiple rounds of thermal cycle are carried out to continuously provide power generation for the turbine generator set.

5. The Brayton concentrated solar power generation method according to any of claims 1-4, **characterized in that**, the power working media include but are not limited to the following: air, helium, nitrogen, carbon dioxide and alkane organic working medium.

6. The Brayton concentrated solar power generation method according to claim 1, **characterized in that**, the heat storage medium enters the heat collection device from the low temperature tank through a medium pump.

7. The Brayton concentrated solar power generation method according to any of claims 1-4, **characterized in that**, the heat storage medium is selected from molten salt, quartz sand, ceramics, concrete, metal, or heat transfer oil.

8. The Brayton concentrated solar power generation method according to claim 7, **characterized in that**, the molten salt is selected from solar salt, Hitec salt and low melting point molten salt.

9. Use of the Brayton concentrated solar power generation method according to any of claims 1-8 in power generation and / or heat supply .

10. An improved Brayton concentrated solar power generation system, **characterized in that**, comprises heliostat, heat collection device, low temperature tank, high temperature heat pool, heat exchanger and turbine generator set;
the heliostat is used for collecting solar energy to the heat collection device;
the low temperature tank is used for storing low temperature heat storage medium; the heat collection device is used to provide a place for the heat storage medium to convert into high temperature heat storage medium through heat collection;
the high temperature thermal storage cell is used for storing high temperature heat storage medium;
the heat exchanger is used for exchanging heat between the high temperature heat storage medium and the power working medium which enter the heat exchanger to obtain the high temperature power working medium;
the heat collection device, high-temperature thermal storage cell, heat exchanger and low-temperature tank are connected in series through pipes to form a circulation circuit for medium flow, so that the high-temperature heat storage medium in the heat collection device enters the high-temperature thermal storage cell from the pipes; the medium in the high-temperature thermal storage cell enters the heat exchanger again to realize the energy conversion between the high-temperature medium and the working medium;
the heat exchanger is connected with the turbine generator set, which is used to make the high temperature power working medium enter the turbine generator set to provide power generation.

11. The Brayton concentrated solar power generation system according to claim 10, **characterized in that**, the heat exchanger is a three-stage heat exchanger; the three-stage heat exchanger includes an superheated steam exchanger, a saturated steam exchanger and a preheating steam exchanger, which are successively connected in series;
the working medium output end of the superheated steam exchanger is connected with the turbine generator set, and the medium output end is connected with the saturated steam exchanger;
the medium output end of the preheating steam exchanger is connected with the low-temperature tank to make the low-temperature medium return to the low-temperature tank after heat exchange ;
alternatively, the heat exchanger can also adopt other types of heat exchanger other than the steam heat exchanger.

12. The Brayton concentrated solar power generation system according to claim 10 or 11, **characterized in that**, the heat storage medium is selected from molten salt, quartz sand, ceramics, concrete, metal, or heat transfer oil.

13. The Brayton concentrated solar power generation system according to claim 12, **characterized in that** the molten salt refers to, solar salt, Hitec salt, or low melting point molten salt.

14. The Brayton concentrated solar power generation system according to claim 10, **characterized in that**, the power working medium is selected from air, helium, nitrogen, carbon dioxide, or alkane organic working medium.

15. Use of the Brayton concentrated solar power generation system of any of claims 11-14 in power generation and / or heating.
